# FASCICULE DE BREVET EUROPEEN

(11) **EP 4 234 851 B1**
(45) Date de publication et mention de la délivrance du brevet: **30.10.2024**
(21) Numéro de dépôt: 23155707.5
(22) Date de dépôt: 09.02.2023
(51) Int. Cl.: E05B 15/02, B64D 29/06, E05C 19/14

(54) **MÉCANISME DE VERROUILLAGE D'AU MOINS UN ÉLÉMENT MOBILE SITUÉ DANS UNE PREMIÈRE ZONE ET COMPORTANT UN COMPOSANT RÉGLABLE DEPUIS UNE DEUXIÈME ZONE, AÉRONEF COMPRENANT AU MOINS UN TEL MÉCANISME DE VERROUILLAGE**
VERRIEGELUNGSMECHANISMUS FÜR MINDESTENS EIN IN EINEM ERSTEN BEREICH ANGEORDNETES BEWEGLICHES ELEMENT MIT EINEM AUS EINEM ZWEITEN BEREICH VERSTELLBAREN BAUTEIL, LUFTFAHRZEUG, DAS MINDESTENS EINEN SOLCHEN VERRIEGELUNGSMECHANISMUS UMFASST
LOCKING MECHANISM FOR AT LEAST ONE MOBILE ELEMENT LOCATED IN A FIRST AREA AND COMPRISING A COMPONENT ADJUSTABLE FROM A SECOND AREA, AIRCRAFT COMPRISING AT LEAST ONE SUCH LOCKING MECHANISM

(30) Priorité: 24.02.2022 FR 2201625
(43) Date de publication de la demande: 30.08.2023
(73) Titulaire: AIRBUS OPERATIONS (S.A.S.), 31060 Toulouse (FR)
(72) Inventeur: BROCHARD, Wolfgang, 31060 Toulouse (FR); CAZEAUX, Laurent, 31060 Toulouse (FR); VIGNOBOUL, Benjamin, 31060 Toulouse (FR)
(74) Mandataire: Fantin, Laurent

(56) Documents cités:
- FR-A1- 2 611 375
- US-A- 4 183 564
- US-A- 4 906 037
- US-A- 5 016 931
- US-B1- 9 273 488

## Description

La présente demande se rapporte à un mécanisme de verrouillage d'au moins un élément mobile situé dans une première zone et comportant au moins un composant réglable depuis une deuxième zone ainsi qu'a un aéronef comprenant au moins un tel mécanisme de verrouillage.

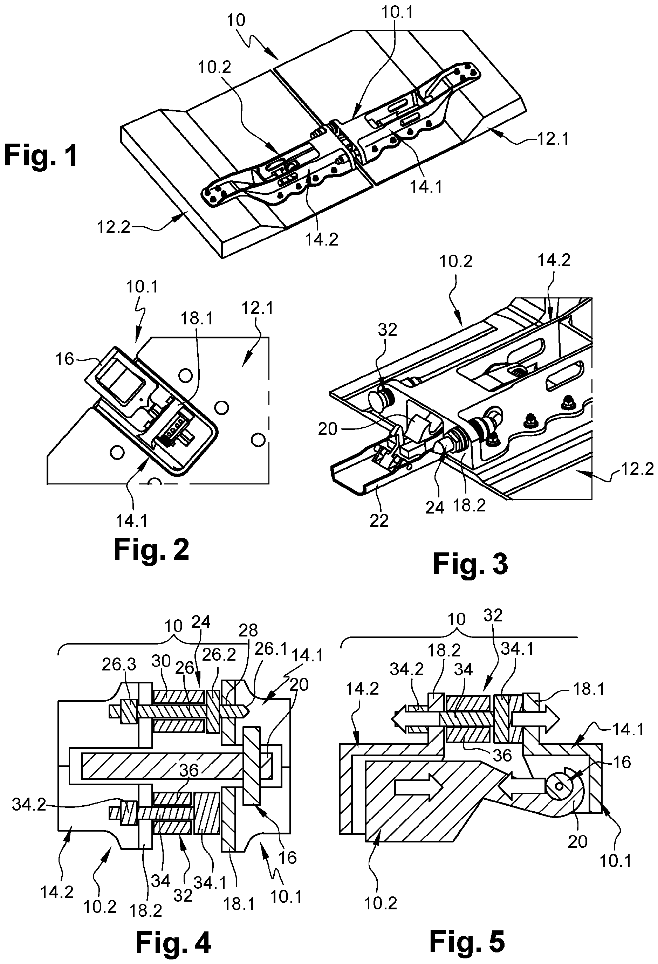

Selon un mode de réalisation, la nacelle d'un aéronef comprend deux capots, positionnés de part et d'autre d'un plan médian vertical, mobiles entre une position fermée et une position ouverte dans laquelle ils autorisent l'accès à l'intérieur de la nacelle. Lorsque les capots sont en position fermée, leurs bords inférieurs sont accolés l'un à l'autre et reliés par des mécanismes de verrouillage permettant de maintenir les capots en position fermée. Comme illustré sur la figure 1, chaque mécanisme de verrouillage 10 comprend une première partie 10.1 solidaire d'un premier capot 12.1 ainsi qu'une deuxième partie 10.2 solidaire d'un deuxième capot 12.2, les première et deuxième parties 10.1, 10.2 étant positionnées contre la face intérieure des capots 12.1, 12.2.

Selon un mode de réalisation visible sur les figures 2, 4 et 5, la première partie 10.1 comprend un premier support 14.1 fixé sur le premier capot 12.1 ainsi qu'un point d'ancrage 16 relié au premier support 14.1. Selon une configuration, le point d'ancrage 16 se présente sous la forme d'une boucle. Le premier support 14.1 comprend une première paroi transversale 18.1 proche du deuxième capot 12.2.

Selon un mode de réalisation visible sur les figures 3 à 5, la deuxième partie 10.2 comprend un deuxième support 14.2 fixé sur le deuxième capot 12.2, un crochet 20 articulé par rapport au deuxième support 14.2 ainsi qu'une poignée 22 permettant de manipuler le crochet 20. Le deuxième support 14.2 présente une deuxième paroi transversale 18.2 proche du premier capot 12.1, parallèle à la première paroi transversale 18.1.

Le mécanisme de verrouillage 10 comprend également un système de centrage 24 permettant de positionner les première et deuxième parties 10.1, 10.2 l'une par rapport à l'autre. Selon une configuration, le système de centrage 24 comprend une première tige cylindrique 26 supportée par la deuxième paroi transversale 18.2 ainsi qu'un orifice 28 prévu sur la première paroi transversale 18.1 et configuré pour recevoir la première tige cylindrique 26. Cette dernière présente une première extrémité pointue 26.1 configurée pour se loger dans l'orifice 28 ainsi qu'une collerette 26.2 configurée pour être en contact avec la première paroi transversale 18.1. Le système de centrage 24 comprend un premier manchon de réglage 30 emmanché sur la première tige cylindrique 26 et intercalé entre la deuxième paroi transversale 18.2 et la collerette 26.2.

Le mécanisme de verrouillage 10 comprend également un système de cale 32 permettant de maintenir une distance donnée entre les première et deuxième parois transversales 18.1, 18.2 lorsque le mécanisme de verrouillage est à l'état verrouillé. Selon une configuration, le système de cale 32 comprend une deuxième tige cylindrique 34, supportée par la deuxième paroi transversale 18.2, qui présente, au niveau de sa première extrémité, une tête cylindrique 34.1 configurée pour prendre appui contre la première paroi transversale 18.1. Le système de cale 32 comprend un deuxième manchon de réglage 36 emmanché sur la deuxième tige cylindrique 34 et intercalé entre la deuxième paroi transversale 18.2 et la tête cylindrique 34.1.

Pour que le mécanisme de verrouillage 10 fonctionne correctement, il est nécessaire que le point d'ancrage 16 soit correctement positionné par rapport au premier support 14.1 et que la tête cylindrique 34.1 du système de cale 32 ainsi que la collerette 26.2 du système de centrage 24 soient correctement positionnées par rapport à la deuxième paroi transversale 18.2 du deuxième support 14.2.

Les géométries et dimensions des nacelles et des capots n'étant pas exactement identiques d'un aéronef à l'autre, les longueurs des manchons de réglage 30, 36 sont différentes d'un aéronef à l'autre. Par conséquent, pour chaque aéronef, les longueurs des manchons de réglage 30, 36 sont ajustées en contrôlant si le mécanisme de verrouillage 10 fonctionne correctement. Les manchons de réglage 30, 36 étant uniquement accessibles depuis l'intérieur de la nacelle lorsque les capots sont en position ouverte et le contrôle du bon fonctionnement du mécanisme de verrouillage 10 ne pouvant être fait que lorsque les capots sont en position fermée, le réglage du mécanisme de verrouillage 10 est relativement long et fastidieux car il est nécessaire d'ouvrir les capots pour modifier les manchons de réglage 30, 36 puis de les refermer pour vérifier si le mécanisme de verrouillage 10 fonctionne correctement, cette succession d'ouvertures et de fermetures étant opérée jusqu'à ce que le mécanisme de verrouillage 10 fonctionne correctement.

Selon des modes de réalisation décrits dans les documents FR2611375, US4906037 et US5016931, un mécanisme de verrouillage comprend un système de réglage qui comprend une commande pivotante, un renvoi d'angle ainsi qu'une liaison hélicoïdale configurée pour convertir un mouvement de pivotement de la commande en un mouvement de translation du crochet ou du point d'ancrage du mécanisme de verrouillage.

La présente invention vise à remédier à tout ou partie des inconvénients de l'art antérieur.

A cet effet, l'invention a pour objet un mécanisme de verrouillage comprenant des première et deuxième parties et configuré pour occuper un état verrouillé dans lequel les première et deuxième parties sont maintenues proches l'une de l'autre ainsi qu'un état déverrouillé dans lequel les première et deuxième parties peuvent s'écarter l'une de l'autre selon une direction longitudinale, la première partie étant configurée pour être fixée sur un premier élément comportant une paroi séparant une première zone et une deuxième zone, la première partie étant située dans la première zone et comprenant un premier support fixé contre la paroi en fonctionnement, la première partie comprenant au moins un composant réglable présentant un positionnement réglable selon la direction longitudinale et étant relié au premier support par une liaison comportant une tige comportant un premier tronçon solidaire du composant réglable.

Selon l'invention, la liaison comprend :
- une liaison glissière configurée pour permettre à au moins au premier tronçon de la tige de se translater par rapport au premier support selon la direction longitudinale,
- un système de réglage comportant :
   ∘ une commande pivotante configurée pour pivoter sur elle-même, traversant la paroi et présentant une première extrémité accessible depuis la deuxième zone en fonctionnement,
   ∘ une pièce intermédiaire configurée pour pivoter sur elle-même,
   ∘ un renvoi d'angle permettant de transformer un mouvement de pivotement de la commande pivotante en un mouvement de pivotement de la pièce intermédiaire,
   ∘ une liaison hélicoïdale configurée pour convertir un mouvement de pivotement de la pièce intermédiaire en un mouvement de translation d'au moins le premier tronçon de la tige,
   ∘ un système anti-retour pour bloquer en rotation selon au moins un sens de rotation la commande pivotante.

Selon l'invention, le positionnement du composant réglable peut être ajusté depuis la deuxième zone. Dans le cas des capots d'une nacelle d'aéronef, il n'est plus nécessaire d'alterner les ouvertures et les fermetures des capots pour ajuster le positionnement du point d'ancrage, du système de centrage et/ou du système de cale. Ce réglage est ainsi grandement simplifié.

Selon un premier mode de réalisation, la pièce intermédiaire est une première bague positionnée autour de la tige et comportant une surface cylindrique intérieure. En complément, la liaison hélicoïdale comprend au moins un taraudage au niveau de la surface cylindrique intérieure de la première bague ainsi qu'au moins un filetage au niveau de la première tige, le taraudage et le filetage étant configurés pour coopérer afin d'obtenir la liaison hélicoïdale, le renvoi d'angle permettant de convertir le mouvement de pivotement de la commande pivotante en un mouvement de pivotement de la première bague.

Selon un deuxième mode de réalisation, la tige comprend un deuxième tronçon coaxial au premier tronçon. En complément, la pièce intermédiaire comprend le deuxième tronçon de la première tige, le renvoi d'angle permettant de convertir le mouvement de pivotement de la commande pivotante en un mouvement de pivotement du deuxième tronçon, la liaison hélicoïdale permettant de convertir le mouvement de pivotement du deuxième tronçon en un mouvement de translation du premier tronçon de la tige.

Selon une autre caractéristique, la première partie comprend une liaison pivot-glissant reliant la première tige et le premier support ainsi qu'un système d'immobilisation en rotation de la première tige.

Selon une autre caractéristique, le système anti-retour comprend une roue à rochet solidaire de la commande pivotante, un cliquet relié au premier support par une liaison pivotante, un élément de rappel élastique configuré pour pousser le cliquet contre la roue à rochet ainsi qu'une came de commande configurée pour écarter le cliquet de la roue à rochet à l'encontre de l'élément de rappel élastique.

Selon une autre caractéristique, la commande pivotante comprend un premier axe de commande présentant une première extrémité accessible depuis la deuxième zone et une face latérale pourvue, au niveau de la première extrémité, d'au moins un méplat pour faire pivoter le premier axe de commande sur lui-même. En complément, le système anti-retour comprend une plaque de blocage en rotation comportant un orifice traversant ayant une section identique à celle de la première extrémité et coopérant avec cette dernière, ladite plaque de blocage en rotation étant reliée au premier support.

Selon une autre caractéristique, le mécanisme de verrouillage comprend plusieurs composants réglables parmi un point d'ancrage configuré pour coopérer avec un crochet, au moins un système de centrage configuré pour permettre de positionner les première et deuxième parties l'une par rapport à l'autre ainsi qu'au moins un système de cale configuré pour permettre de maintenir une distance donnée entre les première et deuxième parties à l'état verrouillé.

L'invention a également pour objet un aéronef comprenant au moins un élément mobile comprenant une paroi séparant une première zone et une deuxième zone et présentant une première face orientée vers la première zone ainsi qu'une deuxième face orientée vers la deuxième zone ainsi qu'au moins un mécanisme de verrouillage, selon l'une des caractéristiques précédentes, positionné dans la première zone et permettant de maintenir l'élément mobile dans une position donnée à l'état verrouillé.

Selon une autre caractéristique, la deuxième face de la paroi comprend, pour chaque commande pivotante, une forme en creux configurée pour loger une partie de la commande pivotante accessible depuis la deuxième zone, ladite commande pivotante comportant une face d'extrémité sensiblement coplanaire avec la deuxième face de la paroi.

Selon une autre caractéristique, le mécanisme de verrouillage comprend, pour chaque forme en creux, une plaque de garnissage dimensionnée pour combler la forme en creux ainsi qu'un système d'attache rapide pour relier la plaque de garnissage à la paroi ou à un support du mécanisme de verrouillage, la plaque de garnissage présentant une face affleurant la deuxième face de la paroi lorsque la plaque de garnissage est reliée à la paroi ou au support. D'autres caractéristiques et avantages ressortiront de la description de l'invention qui va suivre, description donnée à titre d'exemple uniquement, en regard des dessins annexés parmi lesquels :
- La figure 1 est une vue en perspective d'un mécanisme de verrouillage illustrant un mode de réalisation de l'invention,
- La figure 2 est une vue en perspective d'une première partie du mécanisme de verrouillage visible sur la figure 1,
- La figure 3 est une vue en perspective d'une deuxième partie du mécanisme de verrouillage visible sur la figure 1,
- La figure 4 est une représentation schématique en vue de dessus d'un mécanisme de verrouillage illustrant un mode de réalisation de l'art antérieur,
- La figure 5 est une représentation schématique selon une coupe longitudinale d'un mécanisme de verrouillage illustrant un mode de réalisation de l'art antérieur,
- La figure 6 est une vue en perspective d'une première partie d'un mécanisme de verrouillage équipé d'un système de réglage illustrant un mode de réalisation de l'invention,
- La figure 7 est une coupe transversale représentant partiellement un système de réglage d'une première partie d'un mécanisme de verrouillage illustrant un mode de réalisation de l'invention,
- La figure 8 est une coupe longitudinale d'une première partie d'un mécanisme de verrouillage équipé d'un système de réglage illustrant un mode de réalisation de l'invention,
- La figure 9 est une vue de face d'une plaque de garnissage et de blocage en rotation à l'état monté illustrant un mode de réalisation de l'invention,
- La figure 10 est une vue en perspective de la plaque de garnissage et de blocage en rotation visible sur la figure 9 à l'état démonté,
- La figure 11 est une vue en perspective d'un système anti-retour illustrant un mode de réalisation de l'invention,
- La figure 12 est une vue en perspective du système anti-retour visible sur la figure 11 à l'état activé,
- La figure 13 est une vue en perspective du système anti-retour visible sur la figure 11 à l'état débrayé,
- La figure 14 est une vue en perspective d'un mécanisme de verrouillage illustrant un mode de réalisation de l'invention,
- La figure 15 est une coupe transversale représentant partiellement des systèmes de réglage d'un système de centrage et d'un système de cale illustrant un mode de réalisation de l'invention,
- La figure 16 est une coupe longitudinale d'un système de cale équipé d'un système de réglage illustrant un mode de réalisation de l'invention,
- La figure 17 est une vue de face de plaques de garnissage et de blocage en rotation à l'état monté illustrant un mode de réalisation de l'invention,
- La figure 18 est une coupe longitudinale représentant partiellement un système de réglage d'un point d'ancrage d'un mécanisme de verrouillage illustrant un autre mode de réalisation de l'invention.

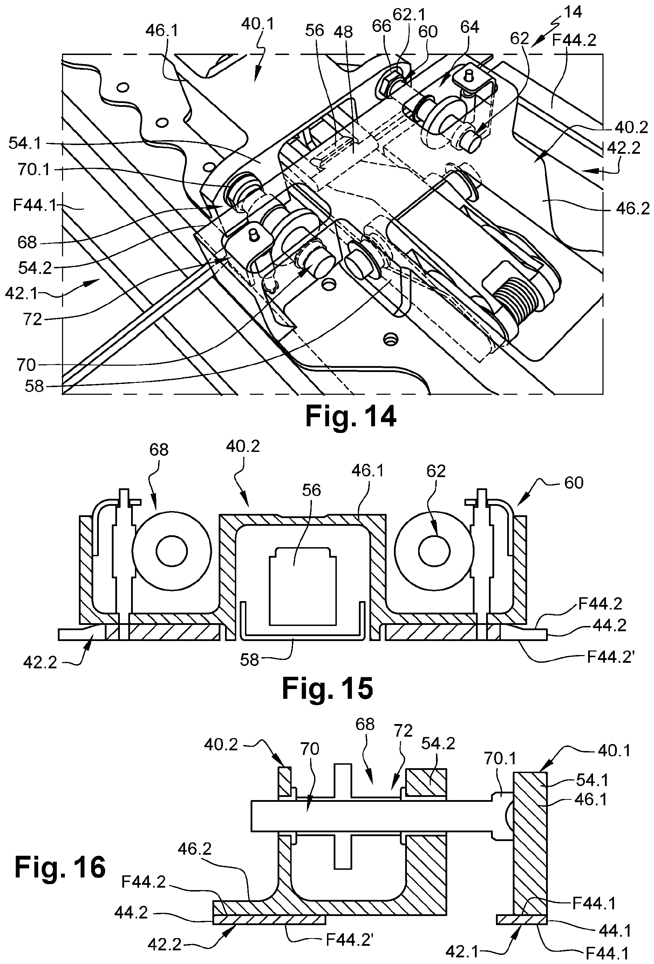

Selon un mode de réalisation visible sur la figure 14, un mécanisme de verrouillage 40 comprend une première partie 40.1 solidaire d'un premier élément 42.1 ainsi qu'une deuxième partie 40.2 solidaire d'un deuxième élément 42.2.

En fonctionnement, le mécanisme de verrouillage 40 est configuré pour occuper un état verrouillé dans lequel les première et deuxième parties 40.1, 40.2 sont maintenues proches l'une de l'autre ainsi qu'un état déverrouillé dans lequel les première et deuxième parties 40.1, 40.2 peuvent s'écarter l'une de l'autre selon une direction longitudinale.

Au droit d'au moins une des première et deuxième parties 40.1, 40.2, le premier ou deuxième élément 42.1, 42.2 comprend une paroi 44.1, 44.2 séparant une première zone et une deuxième zone et présentant une première face F44.1, F44.2 orientée vers la première zone ainsi qu'une deuxième face F44.1', F44.2' orientée vers la deuxième zone, la première ou deuxième parties 40.1, 40.2 étant fixée contre la première face F44.1, F44.2.

Selon une application, les premier et deuxième éléments 42.1, 42.2 sont des capots d'une nacelle d'un aéronef, les première et deuxième parties 40.1, 40.2 étant positionnées contre la face intérieure des capots de la nacelle. Bien entendu, l'invention n'est pas limitée à cette application. Selon un autre agencement, le premier ou deuxième élément est un élément mobile, comme une porte ou un capot par exemple, l'autre élément étant fixe. Quelle que soit l'application, le mécanisme de verrouillage est configuré pour maintenir au moins un élément 42.1, 42.2 mobile dans une position donnée.

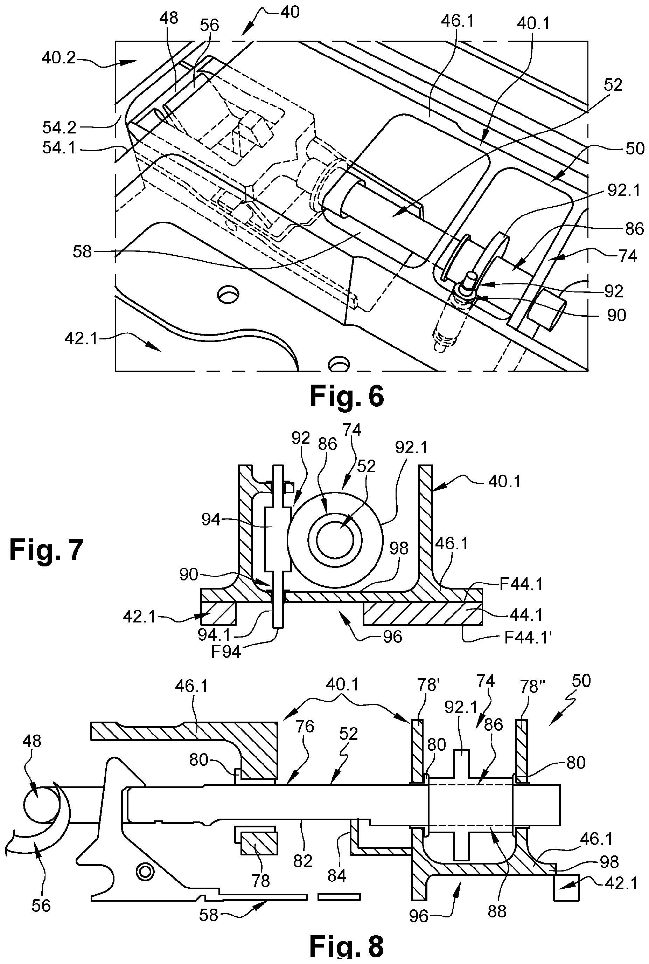

Selon un mode de réalisation visible sur les figures 6 et 14, la première partie 40.1 comprend un premier support 46.1 relié au premier élément 42.1, plus particulièrement fixé contre la première face F44.1 de la paroi 44.1 du premier élément 42.1, ainsi qu'un point d'ancrage 48 relié par une première liaison 50 au premier support 46.1. Selon une configuration, le point d'ancrage 48 se présente sous la forme d'une boucle. Selon un agencement, le premier support 46.1 comprend une première tige 52 qui s'étend entre des première et deuxième extrémités, le point d'ancrage 48 étant relié à la première extrémité de la première tige 52, la deuxième extrémité de la première tige 52 étant reliée par la première liaison 50 au premier support 46.1. Ce dernier comprend une première paroi transversale 54.1 (perpendiculaire à la direction longitudinale) proche du deuxième élément 42.2.

Selon un mode de réalisation visible sur les figures 6 et 14, la deuxième partie 40.2 comprend un deuxième support 46.2 relié au deuxième élément 42.2, plus particulièrement fixé contre la première face F44.2 de la paroi 44.2 du deuxième élément 42.2, un crochet 56 articulé par rapport au deuxième support 46.2 ainsi qu'une poignée 58 permettant de manipuler le crochet 56. Selon une configuration, le crochet 56 pivote autour d'un axe de pivotement sensiblement perpendiculaire à la direction longitudinale. Le deuxième support 46.2 présente une deuxième paroi transversale 54.2 (perpendiculaire à la direction longitudinale) proche du premier élément 42.1, parallèle à la première paroi transversale 54.1.

Le crochet 56 et la poignée 58 ne sont pas plus décrits car ils peuvent être identiques à ceux de l'art antérieur.

Selon un mode de réalisation, le mécanisme de verrouillage 40 comprend également au moins un système de centrage 60 configuré pour permettre de positionner dans un plan transversal les première et deuxième parties 40.1, 40.2 l'une par rapport à l'autre. Selon une configuration, le système de centrage 60 comprend une deuxième tige 62 reliée par une deuxième liaison 64 au deuxième support 46.2 ainsi qu'un orifice 66 prévu au niveau de la première paroi transversale 54.1, l'orifice 66 étant configuré pour recevoir la deuxième tige 62 et présentant une section sensiblement égale ou très légèrement supérieure à celle de la deuxième tige 62. En variante, la deuxième tige 62 est reliée au premier support 46.1 et l'orifice 66 est prévu au niveau de la deuxième paroi transversale 54.2. Selon une configuration, la deuxième tige 62 présente une première extrémité pointue configurée pour se loger dans l'orifice 66, une deuxième extrémité reliée par la deuxième liaison 64 au deuxième support 46.2 ainsi qu'une collerette 62.1 configurée pour être en contact avec la première paroi transversale 54.1 distante des première et deuxième extrémités.

Selon un mode de réalisation visible sur les figures 14 et 16, le mécanisme de verrouillage 40 comprend également au moins un système de cale 68 configuré pour permettre de maintenir une distance donnée entre les première et deuxième parties 40.1, 40.2 à l'état verrouillé. Selon une configuration, le système de cale 68 comprend une troisième tige 70 qui présente une tête 70.1 au niveau de sa première extrémité configurée pour prendre appui contre la première paroi transversale 54.1 ainsi qu'une deuxième extrémité reliée par une troisième liaison 72 au deuxième support 46.2. En variante, la troisième tige 70 est reliée au premier support 46.1 et la tête 70.1 est configurée pour prendre appui contre la deuxième paroi transversale 54.2.

Selon une configuration visible sur les figures 6 à 8, la première liaison 50 reliant le point d'ancrage 48 et le premier support 46.1 est configurée pour permettre un réglage de la position du point d'ancrage 48 par rapport au premier support 46.1 selon la direction longitudinale. A cet effet, la première liaison 50 comprend un premier système de réglage 74 permettant d'ajuster la position du point d'ancrage 48 par rapport au premier support 46.1 selon la direction longitudinale.

La première liaison 50 comprend une liaison glissière 76, reliant la première tige 52 et le premier support 46.1, configurée pour permettre à la première tige 52 de se translater selon une direction parallèle à la direction longitudinale. Selon un mode de réalisation, la première tige 52 est reliée au premier support 46.1 par une liaison pivot-glissant. Ainsi, le premier support 46.1 comprend au moins deux ailes transversales 78 traversées par la première tige 52. Cette dernière est cylindrique et la première liaison 50 comprend des bagues de guidage 80 intercalées entre chaque aile transversale 78 et la première tige 52. Selon un agencement, une aile transversale 78 est positionnée au niveau de la première extrémité de la première tige 52 et deux ailes transversales 78', 78" faiblement espacées sont positionnées au niveau de la deuxième extrémité de la première tige 52. Pour obtenir une liaison glissière et que la première tige 52 ne pivote pas sur elle-même, la première partie 40.1 comprend un système d'immobilisation en rotation de la première tige 52 qui comporte une rainure longitudinale 82 prévue sur la première tige 52 ainsi qu'un doigt 84 solidaire du premier support 46.1 se logeant au moins partiellement dans la rainure longitudinale 82. D'autres solutions sont envisageables pour obtenir une liaison glissière 76.

Le premier système de réglage 74 comprend une première bague 86 entourant la première tige 52, une liaison hélicoïdale 88 reliant la première bague 86 et la première tige 52, une commande pivotante 90 qui présente une première extrémité accessible depuis la deuxième zone ainsi qu'un renvoi d'angle 92 reliant la commande pivotante 90 et la première bague 86.

Selon un mode de réalisation, la liaison hélicoïdale 88 comprend au moins un taraudage au niveau de la surface cylindrique intérieure de la première bague 86 ainsi qu'au moins un filetage au niveau de la première tige 52, le taraudage et le filetage étant configurés pour coopérer afin d'obtenir la liaison hélicoïdale 88.

La commande pivotante 90 comprend un premier axe de commande 94 de révolution, relié au premier support 46.1 par une liaison pivotante, orienté sensiblement perpendiculaire à la direction longitudinale et comportant une première extrémité 94.1 située dans la deuxième zone ou accessible depuis la deuxième zone.

Le renvoi d'angle 92 comprend une couronne 92.1 solidaire de la première bague 86, une première denture prévue au niveau de la couronne 92.1 ainsi qu'une deuxième denture prévue au niveau du premier axe de commande 94, les première et deuxième dentures étant configurées pour coopérer afin d'obtenir le renvoi d'angle 92. Selon un premier agencement, la première denture est prévue au niveau de la face périphérique cylindrique de la couronne 92.1, le premier axe de commande 94 et la couronne 92.1 étant positionnés dans un même plan transversal. Selon un deuxième agencement, la première denture est prévue au niveau d'une des faces latérales planes de la couronne 92.1, le premier axe de commande 94 et la couronne 92.1 étant décalés selon la direction longitudinale.

La première extrémité 94.1 du premier axe de commande 94 est configurée pour permettre de le faire pivoter sur lui-même. Selon une variante, la première extrémité 94.1 présente une face latérale pourvue d'au moins un méplat, comme une section hexagonale par exemple. Bien entendu, l'invention n'est pas limitée à cette géométrie pour la première extrémité 94.1. Ainsi, cette dernière peut comprendre au niveau de sa face d'extrémité F94, une empreinte femelle avec une section pourvue d'au moins un méplat, comme une section hexagonale par exemple. Dans ce cas, le premier axe de commande 94 peut comprendre une paroi latérale cylindrique au niveau de la première extrémité 94.1.

La deuxième face F44.1' de la paroi 44.1 du premier élément 42.1 comprend une forme en creux 96 configurée pour loger la partie de la commande pivotante 90 accessible depuis la deuxième zone, plus particulièrement sa première extrémité 94.1. Ainsi, la partie de la commande pivotante 90 accessible depuis la deuxième zone n'est pas en saillie par rapport à la deuxième face F44.1' de la paroi 44.1. Selon un agencement, la commande pivotante 90 comprend une face d'extrémité F94 sensiblement coplanaire avec la deuxième face F44.1' de la paroi 44.1. Cet agencement permet de ne pas altérer les performances aérodynamiques de l'aéronef. La forme en creux 96 est dimensionnée pour permettre de manoeuvrer aisément la commande pivotante 90.

La forme en creux 96 peut être borgne ou traversante, comme illustré sur la figure 7. Selon ce dernier mode de réalisation, le premier support 46.1 comprend une paroi longitudinale 98 plaquée contre la première face F44.1 de la paroi 44.1 du premier élément 42.1 et dimensionnée pour obturer la forme en creux 96 lorsque cette dernière est traversante. Elle comporte un orifice traversant pour permettre le passage de la commande pivotante 90, plus particulièrement du premier axe de commande 94.

Le mécanisme de verrouillage 40 comprend une plaque de garnissage 100 dimensionnée pour combler la forme en creux 96 ainsi qu'un système d'attache rapide 102 pour relier la plaque de garnissage 100 à la paroi 44.1 du premier élément 42.1 ou à la paroi longitudinale 98 du premier support 46.1. Selon une configuration, dans le cas d'une forme en creux 96 traversante, cette plaque de garnissage 100 présente une première face plaquée contre la paroi longitudinale 98 et une deuxième face affleurant la deuxième face F44.1' de la paroi 44.1 du premier élément 42.1 (pour ne pas altérer les performances aérodynamiques de l'aéronef) lorsque la plaque de garnissage 100 est fixée à la paroi longitudinale 98. Le système d'attache rapide 102 comprend au moins une vis quart de tour pour faciliter le démontage de la plaque de garnissage 100.

Selon un mode de réalisation, le premier système de réglage 74 comprend un système anti-retour 104 pour bloquer en rotation, selon au moins un sens de rotation, la commande pivotante 90 afin d'immobiliser le point d'ancrage 48 dans la position réglée.

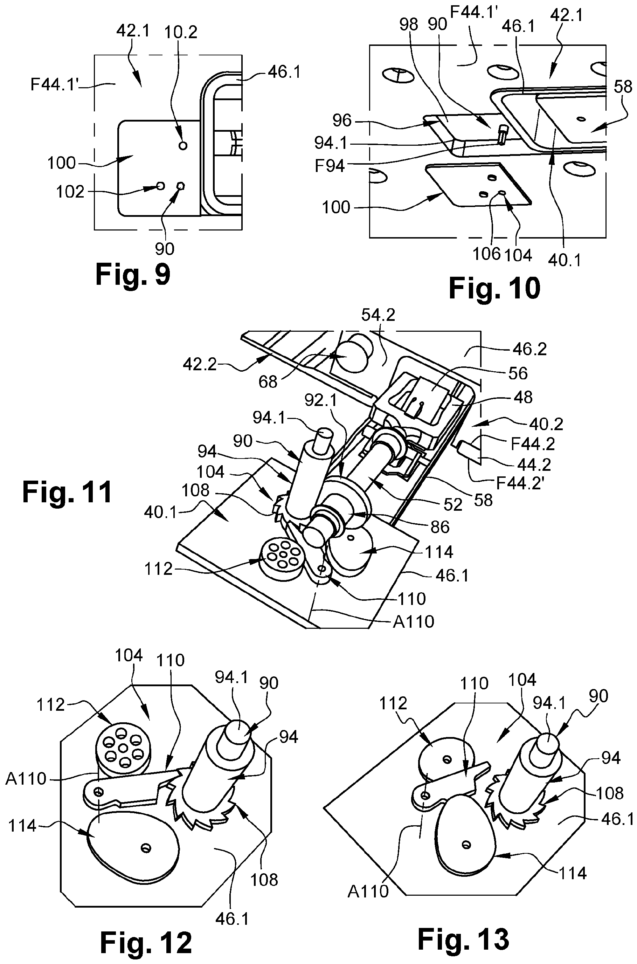

Selon une première configuration visible sur les figures 9 et 10, lorsque la face latérale de la première extrémité 94.1 du premier axe de commande 94 présente au moins un méplat pour le faire pivoter, le système anti-retour 104 comprend une plaque de blocage en rotation comportant un orifice traversant 106 ayant une section identique à celle de la première extrémité 94.1 et coopérant avec cette dernière, ladite plaque de blocage en rotation étant reliée au premier support 46.1. Selon cette première configuration, le système anti-retour 104 permet d'immobiliser la commande pivotante 90 dans les deux sens de rotation.

Selon un agencement, la plaque de garnissage et la plaque de blocage en rotation ne forment qu'une même et unique plaque.

Selon une deuxième configuration visible sur les figures 11 à 13, le système anti-retour 104 comprend une roue à rochet 108 solidaire de la commande pivotante 90, plus particulièrement du premier axe de commande 94, un cliquet 110 relié au premier support 46.1 et relié à ce dernier par une liaison pivotante présentant un axe de pivotement A110 parallèle au premier axe de commande 94, un élément de rappel élastique 112 configuré pour pousser le cliquet 110 contre la roue à rochet 108 ainsi qu'une came de commande 114 configurée pour écarter le cliquet 110 de la roue à rochet 108 à l'encontre de l'élément de rappel élastique 112. Selon une configuration, la came de commande 114 est reliée à un deuxième axe de commande sensiblement parallèle au premier axe de commande 94, ledit deuxième axe de commande ayant une extrémité accessible depuis la deuxième zone. Selon cette deuxième configuration, le système anti-retour 104 est configuré pour occuper un état activé (visible sur la figure 12) dans lequel le cliquet 110 coopère avec la roue à rochet 108 afin d'immobiliser la commande pivotante 90 dans un sens de rotation ainsi qu'un état débrayé (visible sur la figure 13) dans lequel le cliquet 110 est écarté de la roue à rochet 108 permettant une rotation de la commande pivotante 90 dans les deux sens de rotation.

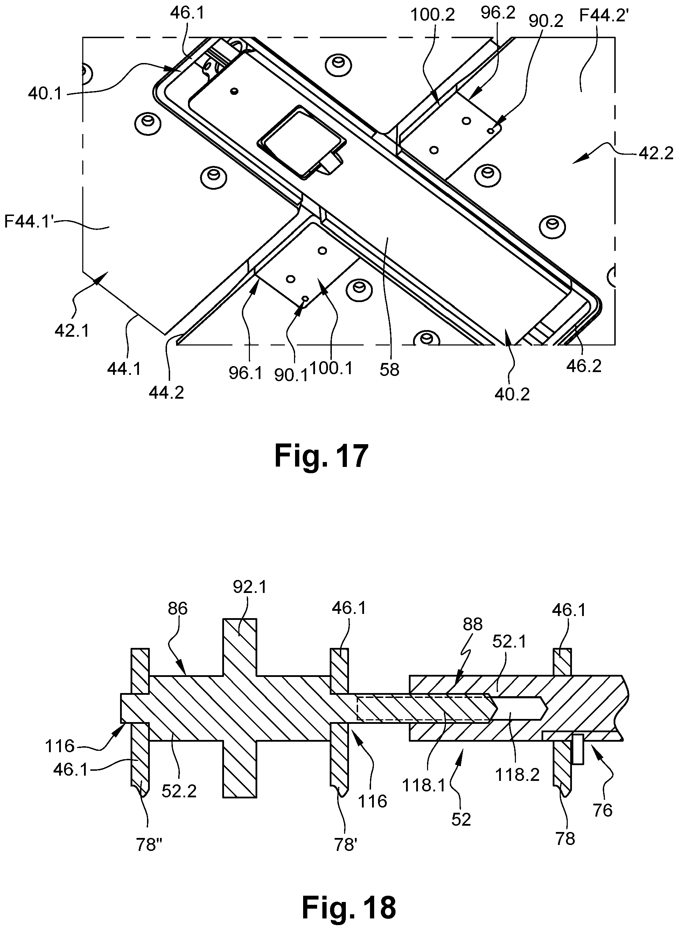

Bien entendu, l'invention n'est pas limitée au mode de réalisation visible sur les figures 6 à 8 pour le premier système de réglage 74. Selon un autre mode de réalisation visible sur la figure 18, la première tige 52 comprend des premier et deuxième tronçons 52.1, 52.2 coaxiaux ainsi qu'une liaison hélicoïdale 88 les reliant. Le premier tronçon 52.1 est solidaire du point d'ancrage 48 (relié à ce dernier par une liaison rigide) et relié au premier support 46.1 par une liaison glissière 76. Le deuxième tronçon 52.2 est relié au premier support 46.1 par une liaison pivotante 116. En complément, la première bague 86 est solidaire du deuxième tronçon 52.2 et reliée à ce dernier par une liaison rigide.

Selon le mode de réalisation visible sur la figure 18, la liaison hélicoïdale 88 comprend une première pièce parmi les premier et deuxième tronçons 52.1, 52.2 qui présente une première extrémité 118.1 configurée pour se loger dans un trou 118.2 prévu au niveau d'une deuxième extrémité d'une deuxième pièce, différente de la première pièce, parmi les premier et deuxième tronçons 52.1, 52.2, la première extrémité 118.1 comportant un filetage, le trou 118.2 comportant un taraudage configuré pour coopérer avec le filetage de la première extrémité 118.1 afin d'obtenir la liaison hélicoïdale. Selon un agencement, la première extrémité 118.1 est prévue sur le deuxième tronçon 52.2 et le trou 118.2 est prévu au niveau du premier tronçon 52.1.

Pour obtenir le réglage du positionnement du point d'ancrage 48 selon la direction longitudinale, quel que soit le mode de réalisation, la première liaison 50 reliant la première tige 52 et le premier support 46.1 et comportant un premier tronçon 52.1 solidaire du point d'ancrage 48 comprend :
- une liaison glissière 76 permettant au premier tronçon 52.1 de la première tige 52 au moins, de se translater par rapport au premier support 46.1 selon une direction longitudinale,
- un système de réglage 74 comportant :
   ∘ une commande pivotante 90 configurée pour pivoter sur elle-même et présentant une première extrémité accessible depuis la deuxième zone,
   ∘ une pièce intermédiaire configurée pour pivoter sur elle-même,
   ∘ une liaison hélicoïdale 88 configurée pour convertir un mouvement de pivotement de la pièce intermédiaire en un mouvement de translation du premier tronçon 52.1 de la première tige 52 au moins,
   ∘ un renvoi d'angle 92 permettant de convertir un mouvement de pivotement de la commande pivotante 90 en un mouvement de pivotement de la pièce intermédiaire.

Selon le premier mode de réalisation visible sur les figures 6 à 8, la pièce intermédiaire correspond à la première bague 86, le renvoi d'angle 92 permettant de convertir le mouvement de pivotement de la commande pivotante 90 en un mouvement de pivotement de la première bague 86, la liaison hélicoïdale 88 permettant de convertir le mouvement de pivotement de la première bague 86 en un mouvement de translation de la première tige 52. Selon un deuxième mode de réalisation visible sur la figure 18, la pièce intermédiaire comprend le deuxième tronçon 52.2 de la première tige 52. Le renvoi d'angle 92 permet de convertir le mouvement de pivotement de la commande pivotante 90 en un mouvement de pivotement du deuxième tronçon 52.2, la liaison hélicoïdale 88 permettant de convertir le mouvement de pivotement du deuxième tronçon 52.2 en un mouvement de translation du premier tronçon 52.1 de la première tige 52.

Selon une configuration visible sur les figures 14 à 17, le système de centrage 60 et le système de cale 68, reliés au deuxième support 46.2, sont positionnés de part et d'autre de la poignée 58.

Selon un mode de réalisation, chacune des deuxième et troisième liaisons 64, 72 reliant le système de centrage 60 et le système de cale 68 au deuxième support 46.2 est configurée pour permettre un réglage du positionnement du système de centrage 60 et du système de cale 68 par rapport au deuxième support 46.2 selon la direction longitudinale. A cet effet, les deuxième et troisième liaisons 64, 72 comprennent chacune un système de réglage analogue au premier système de réglage 74 permettant d'ajuster la position du système de centrage 60 et du système de cale 68 par rapport au deuxième support 46.2 selon la direction longitudinale, comme illustré sur les figures 14 à 17. Ainsi, le système de centrage 60 et le système de cale 68 comprennent des commandes pivotantes 90.1, 90.2 distinctes accessibles depuis des formes en creux 96.1, 96.2 positionnées de part et d'autre de la poignée 58, au niveau de la deuxième face F44.2' de la paroi 44.2 et comblées par des plaques de garnissage 100.1, 100.2 démontables.

Quel que soit le mode de réalisation, au moins un composant parmi le point d'ancrage 48, le système de centrage 60 et le système de cale 68 présente un positionnement réglable selon la direction longitudinale. Ce composant réglable est relié au premier ou deuxième support 46.1, 46.2 par une liaison 50, 64, 72 qui comprend :
- une tige 52, 62, 70 comportant un premier tronçon 52.1 solidaire du composant réglable,
- une liaison glissière permettant au moins au premier tronçon 52.1 de la tige 52, 62, 70 de se translater par rapport au premier ou deuxième support 46.1, 46.2 selon la direction longitudinale,
- un système de réglage 74 comportant :
   ∘ une commande pivotante 90 configurée pour pivoter sur elle-même et présentant une première extrémité accessible depuis la deuxième zone,
   ∘ une pièce intermédiaire configurée pour pivoter sur elle-même,
   ∘ une liaison hélicoïdale 88 configurée pour convertir un mouvement de pivotement de la pièce intermédiaire en un mouvement de translation du premier tronçon 52.1 de la tige 52, 62, 70 au moins,
   ∘ un renvoi d'angle 92 permettant de transformer un mouvement de pivotement de la commande pivotante 90 en un mouvement de pivotement de la pièce intermédiaire.

Cet agencement permet d'ajuster le positionnement du composant réglable depuis la deuxième zone. Dans le cas des capots d'une nacelle d'aéronef, il n'est plus nécessaire d'alterner les ouvertures et les fermetures des capots pour ajuster le positionnement du point d'ancrage 48, du système de centrage 60 et/ou du système de cale 68. Ce réglage est ainsi grandement simplifié.

## Revendications

1. Mécanisme de verrouillage comprenant des première et deuxième parties (40.1, 40.2) et configuré pour occuper un état verrouillé dans lequel les première et deuxième parties (40.1, 40.2) sont maintenues proches l'une de l'autre ainsi qu'un état déverrouillé dans lequel les première et deuxième parties (40.1, 40.2) peuvent s'écarter l'une de l'autre selon une direction longitudinale, la première partie (40.1) étant configurée pour être fixée sur un premier élément (42.1, 42.2) comportant une paroi (44.1, 44.2) séparant une première zone et une deuxième zone, la première partie (40.1) étant située dans la première zone et comprenant un premier support (46.1) fixé contre la paroi (44.1, 44.2) en fonctionnement, la première partie (40.1) comprenant au moins un composant réglable présentant un positionnement réglable selon la direction longitudinale et étant relié au premier support (46.1) par une liaison (50, 64, 72) comportant une tige (52, 62, 70) qui comporte un premier tronçon (52.1) solidaire du composant réglable ; la liaison (50, 64, 72) comprenant :
- une liaison glissière configurée pour permettre au premier tronçon (52.1) de la tige (52, 62, 70) au moins, de se translater par rapport au premier support (46.1) selon la direction longitudinale,
- un système de réglage (74) comportant :
∘ une commande pivotante (90) configurée pour pivoter sur elle-même, traversant la paroi (44.1, 44.2) et présentant une première extrémité accessible depuis la deuxième zone en fonctionnement,
∘ une pièce intermédiaire configurée pour pivoter sur elle-même,
∘ un renvoi d'angle (92) permettant de transformer un mouvement de pivotement de la commande pivotante (90) en un mouvement de pivotement de la pièce intermédiaire,
∘ une liaison hélicoïdale (88) configurée pour convertir un mouvement de pivotement de la pièce intermédiaire en un mouvement de translation d'au moins le premier tronçon (52.1) de la tige (52, 62, 70),
**caractérisé en ce que** le système de réglage (74) comprend un système anti-retour (104) pour bloquer en rotation selon au moins un sens de rotation la commande pivotante (90).

2. Mécanisme de verrouillage selon la revendication 1, **caractérisé en ce que** la pièce intermédiaire est une première bague (86) positionnée autour de la tige (52) et comportant une surface cylindrique intérieure et **en ce que** la liaison hélicoïdale (88) comprend au moins un taraudage au niveau de la surface cylindrique intérieure de la première bague (86) ainsi qu'au moins un filetage au niveau de la tige (52), le taraudage et le filetage étant configurés pour coopérer afin d'obtenir la liaison hélicoïdale (88), le renvoi d'angle (92) permettant de convertir le mouvement de pivotement de la commande pivotante (90) en un mouvement de pivotement de la première bague (86).

3. Mécanisme de verrouillage selon la revendication 1, **caractérisé en ce que** la tige (52) comprend un deuxième tronçon (52.2) coaxial au premier tronçon (52.1) et **en ce que** la pièce intermédiaire comprend le deuxième tronçon (52.2) de la tige (52), le renvoi d'angle (92) permettant de convertir le mouvement de pivotement de la commande pivotante (90) en un mouvement de pivotement du deuxième tronçon (52.2), la liaison hélicoïdale (88) permettant de convertir le mouvement de pivotement du deuxième tronçon (52.2) en un mouvement de translation du premier tronçon (52.1) de la tige (52).

4. Mécanisme de verrouillage selon l'une des revendications précédentes, **caractérisé en ce que** la première partie (40.1) comprend une liaison pivot-glissant reliant la tige (52) et le premier support (46.1) ainsi qu'un système d'immobilisation en rotation de la tige (52).

5. Mécanisme de verrouillage selon l'une des revendications précédentes, **caractérisé en ce que** le système anti-retour (104) comprend une roue à rochet (108) solidaire de la commande pivotante (90), un cliquet (110) relié au premier support (46.1) par une liaison pivotante, un élément de rappel élastique (112) configuré pour pousser le cliquet (110) contre la roue à rochet (108) ainsi qu'une came de commande (114) configurée pour écarter le cliquet (110) de la roue à rochet (108) à l'encontre de l'élément de rappel élastique (112).

6. Mécanisme de verrouillage selon l'une des revendications précédentes, **caractérisé en ce que** la commande pivotante (90) comprend un premier axe de commande (94) présentant une première extrémité (94.1) accessible depuis la deuxième zone et une face latérale pourvue, au niveau de la première extrémité (94.1), d'au moins un méplat pour faire pivoter le premier axe de commande (94) sur lui-même et **en ce que** le système anti-retour (104) comprend une plaque de blocage en rotation qui comporte un orifice traversant (106) ayant une section identique à celle de la première extrémité (94.1) et coopérant avec cette dernière, ladite plaque de blocage en rotation étant reliée au premier support (46.1).

7. Mécanisme de verrouillage selon l'une des revendications précédentes, **caractérisé en ce que** le mécanisme de verrouillage comprend plusieurs composants réglables parmi un point d'ancrage (48) configuré pour coopérer avec un crochet (56), au moins un système de centrage (60) configuré pour permettre de positionner les première et deuxième parties (40.1, 40.2) l'une par rapport à l'autre, au moins un système de cale (68) configuré pour permettre de maintenir une distance donnée entre les première et deuxième parties (40.1, 40.2) à l'état verrouillé.

8. Aéronef comprenant au moins un élément mobile (42.1, 42.2) comprenant une paroi (44.1, 44.2) séparant une première zone et une deuxième zone et présentant une première face (F44.1, F44.2) orientée vers la première zone ainsi qu'une deuxième face (F44.1', F44.2') orientée vers la deuxième zone ainsi qu'au moins un mécanisme de verrouillage selon l'une des revendications précédentes positionné dans la première zone et permettant de maintenir l'élément mobile (4.21, 42.2) dans une position donnée à l'état verrouillé.

9. Aéronef selon la revendication précédente, **caractérisé en ce que** la deuxième face (F44.1') de la paroi (44.1) comprend, pour chaque commande pivotante (90), une forme en creux (96) configurée pour loger une partie de la commande pivotante (90) accessible depuis la deuxième zone, ladite commande pivotante (90) comportant une face d'extrémité (F94) sensiblement coplanaire avec la deuxième face (F44.1') de la paroi (44.1).

10. Aéronef selon la revendication précédente, **caractérisé en ce que** le mécanisme de verrouillage (40) comprend, pour chaque forme en creux (96), une plaque de garnissage (100) dimensionnée pour combler la forme en creux (96) ainsi qu'un système d'attache rapide (102) pour relier la plaque de garnissage (100) à la paroi (44.1) ou à un support (46.1) du mécanisme de verrouillage (40), la plaque de garnissage (100) présentant une face affleurant la deuxième face (F44.1') de la paroi (44.1) lorsque la plaque de garnissage (100) est reliée à la paroi (44.1) ou au support (46.1).

## Patentansprüche

1. Verriegelungsmechanismus, der einen ersten und einen zweiten Bereich (40.1, 40.2) aufweist und so eingerichtet ist, dass er einen verriegelten Zustand, in dem der erste und der zweite Bereich (40.1, 40.2) nahe beieinander gehalten sind, sowie einen entriegelten Zustand einnimmt, in dem sich der erste und der zweite Bereich (40.1, 40.2) in eine Längsrichtung auseinander bewegen können, wobei der erste Bereich (40.1) so eingerichtet ist, dass er auf einem ersten Element (42.1, 42.2) befestigt werden kann, das eine Wand (44.1, 44.2) aufweist, die eine erste Zone und eine zweite Zone trennt, wobei sich der erste Bereich (40.1) in der ersten Zone befindet und einen ersten Träger (46.1) aufweist, der im Betrieb an der Wand (44.1, 44.2) befestigt ist, und wobei der erste Bereich (40.1) wenigstens eine einstellbare Komponente umfasst, die in Längsrichtung eine einstellbare Positionierung bietet und mit dem ersten Träger (46.1) durch eine Verbindung (50, 64, 72) verbunden ist, die eine Stange (52, 62, 70) aufweist, die einen ersten Abschnitt (52.1) aufweist, der fest mit der einstellbaren Komponente verbunden ist; wobei die Verbindung (50, 64, 72) umfasst:
- eine Gleitverbindung, die so eingerichtet ist, dass sie es zumindest dem ersten Abschnitt (52.1) der Stange (52, 62, 70) ermöglicht, sich in Bezug auf den ersten Träger (46.1) in Längsrichtung zu verschieben,
- ein Einstellsystem (74) mit:
∘ einen Schwenkantrieb (90), der so eingerichtet ist, dass er um sich selbst schwenkt, die Wand (44.1, 44.2) durchdringt und ein erstes Ende aufweist, das im Betrieb von der zweiten Zone aus zugänglich ist,
∘ ein Zwischenstück, das so eingerichtet ist, dass es um sich selbst schwenkt,
∘ ein Umlenkgetriebe (92), mit dem eine Schwenkbewegung des Schwenkantriebs (90) in eine Schwenkbewegung des Zwischenstücks umwandelbar ist,
∘ eine Schneckenverbindung (88), die so eingerichtet ist, dass sie eine Schwenkbewegung des Zwischenstücks in eine Translationsbewegung von wenigstens dem ersten Abschnitt (52.1) der Stange (52, 62, 70) umwandelt,
**dadurch gekennzeichnet, dass** das Einstellsystem (74) ein Rücklaufsperrsystem (104) aufweist, um den Schwenkantrieb (90) gegen Drehung in wenigstens eine Drehrichtung zu blockieren.

2. Verriegelungsmechanismus nach Anspruch 1, **dadurch gekennzeichnet, dass** das Zwischenstück ein erster Ring (86) ist, der um die Stange (52) herum angeordnet ist und eine zylindrische Innenfläche aufweist, und dass die Schneckenverbindung (88) wenigstens ein Innengewinde an der zylindrischen Innenfläche des ersten Rings (86) sowie wenigstens ein Schneckengewinde an der Stange (52) aufweist, wobei das Innengewinde und das Schneckengewinde so eingerichtet sind, dass sie zusammenwirken, um die Schneckenverbindung (88) zu erhalten, wobei das Umlenkgetriebe (92) es ermöglicht, die Schwenkbewegung des Schwenkantriebs (90) in eine Schwenkbewegung des ersten Rings (86) umzuwandeln.

3. Verriegelungsmechanismus nach Anspruch 1, **dadurch gekennzeichnet, dass** die Stange (52) einen zweiten Abschnitt (52.2) umfasst, der koaxial zum ersten Abschnitt (52.1) verläuft, und dass das Zwischenstück den zweiten Abschnitt (52.2) der Stange (52) umfasst, wobei das Umlenkgetriebe (92) es ermöglicht, die Schwenkbewegung des Schwenkantriebs (90) in eine Schwenkbewegung des zweiten Abschnitts (52.2) umzuwandeln, und wobei die Schneckenverbindung (88) es ermöglicht, die Schwenkbewegung des zweiten Abschnitts (52.2) in eine Translationsbewegung des ersten Abschnitts (52.1) der Stange (52) umzuwandeln.

4. Verriegelungsmechanismus nach einem der vorhergehenden Ansprüche, **dadurch gekennzeichnet, dass** der erste Bereich (40.1) eine Dreh-Gleitverbindung, die die Stange (52) und den ersten Träger (46.1) verbindet, sowie ein System zur Rotationssicherung der Stange (52) aufweist.

5. Verriegelungsmechanismus nach einem der vorhergehenden Ansprüche, **dadurch gekennzeichnet, dass** das Rücklaufsperrsystem (104) ein Sperrklinkenrad (108), das fest mit dem Schwenkantrieb (90) verbunden ist, eine Sperrklinke (110), die mit dem ersten Träger (46. 1) durch eine Schwenkverbindung verbunden ist, ein elastisches Rückstellelement (112), das so eingerichtet ist, dass es die Sperrklinke (110) gegen das Sperrklinkenrad (108) drückt, sowie einen Steuernocken (114) aufweist, der so eingerichtet ist, dass er die Sperrklinke (110) gegen das elastische Rückstellelement (112) von dem Sperrklinkenrad (108) wegbewegt.

6. Verriegelungsmechanismus nach einem der vorhergehenden Ansprüche, **dadurch gekennzeichnet, dass** der Schwenkantrieb (90) eine erste Antriebsachse (94) aufweist, mit einem ersten Ende (94.1), das von der zweiten Zone aus zugänglich ist, und mit einer Seitenfläche, die an dem ersten Ende (94.1) mit wenigstens einer Abflachung versehen ist, um die erste Antriebsachse (94) um sich selbst drehen zu lassen, und dass das Rücklaufsperrsystem (104) eine Drehsperrplatte umfasst, die eine Durchgangsöffnung (106) mit einem Querschnitt aufweist, der mit dem des ersten Endes (94.1) identisch ist und mit diesem zusammenwirkt, wobei die Drehsperrplatte mit dem ersten Träger (46.1) verbunden ist.

7. Verriegelungsmechanismus nach einem der vorhergehenden Ansprüche, **dadurch gekennzeichnet, dass** der Verriegelungsmechanismus mehrere einstellbare Komponenten aufweist, darunter einen Ankerpunkt (48), der so eingerichtet ist, dass er mit einem Haken (56) zusammenwirkt, wenigstens ein Zentriersystem (60), das so eingerichtet ist, dass es die Positionierung des ersten und des zweiten Bereichs (40.1, 40.2) relativ zueinander ermöglicht, und wenigstens ein Abstandsystem (68), das so eingerichtet ist, dass es die Aufrechterhaltung eines gegebenen Abstands zwischen dem ersten und dem zweiten Bereich (40.1, 40.2) im verriegelten Zustand ermöglicht.

8. Luftfahrzeug mit wenigstens einem beweglichen Element (42.1, 42.2), das eine Wand (44.1, 44.2) umfasst, die eine erste Zone und eine zweite Zone voneinander trennt und eine erste Seite (F44.1, F44.2) aufweist, die der ersten Zone zugewandt ist, sowie eine zweite Seite (F44.1', F44.2'), die der zweiten Zone zugewandt ist, sowie wenigstens einen Verriegelungsmechanismus nach einem der vorhergehenden Ansprüche, der in der ersten Zone angeordnet ist und es ermöglicht, das bewegliche Element (4.21, 42.2) im verriegelten Zustand in einer bestimmten Position zu halten.

9. Luftfahrzeug nach dem vorhergehenden Anspruch,
**dadurch gekennzeichnet, dass** die zweite Seite (F44.1') der Wand (44.1) jeweils für den Schwenkantrieb (90) eine vertiefte Form (96) aufweist, die so eingerichtet ist, dass sie einen Teil des Schwenkantriebs (90) aufnimmt, der von der zweiten Zone aus zugänglich ist, wobei der Schwenkantrieb (90) eine Endfläche (F94) aufweist, die im Wesentlichen komplanar mit der zweiten Seite (F44.1') der Wand (44.1) ist.

10. Flugzeug nach dem vorhergehenden Anspruch, **dadurch gekennzeichnet, dass** der Verriegelungsmechanismus (40) für die vertiefte Form (96) jeweils eine Verkleidungsplatte (100) aufweist, die so bemessen ist, dass sie die vertiefte Form (96) ausfüllt, sowie ein Schnellbefestigungssystem (102) aufweist, um die Verkleidungsplatte (100) mit der Wand (44.1) oder einem Träger (46.1) des Verriegelungsmechanismus (40) zu verbinden, wobei die Verkleidungsplatte (100) eine Seite aufweist, die mit der zweiten Seite (F44.1') der Wand (44.1) bündig ist, wenn die Verkleidungsplatte (100) mit der Wand (44.1) oder dem Träger (46.1) verbunden ist.

## Claims

1. Locking mechanism comprising first and second parts (40.1, 40.2) and configured to occupy a locked state in which the first and second parts (40.1, 40.2) are kept close to one another and an unlocked state in which the first and second parts (40.1, 40.2) can be separated from one another in a longitudinal direction, the first part (40.1) being configured to be fixed onto a first element (42.1, 42.2) comprising a wall (44.1, 44.2) separating a first zone and a second zone, the first part (40.1) being situated in the first zone and comprising a first support (46.1) fixed against the wall (44.1, 44.2) in operation, the first part (40.1) comprising at least one adjustable component having a positioning that can be adjusted in the longitudinal direction and that is linked to the first support (46.1) by a link ( (50, 64, 72) comprising a rod (52, 62, 70) which comprises a first segment (52.1) secured to the adjustable component; the link (50, 64, 72) comprising:
- a guideway link configured to allow at least the first segment (52.1) of the rod (52, 62, 70) to be translated with respect to the first support (46.1) in the longitudinal direction,
- an adjustment system (74) comprising:
∘ a pivoting control (90) configured to pivot on itself, passing through the wall (44.1, 44.2) and having a first end accessible from the second zone in operation;
∘ an intermediate piece configured to pivot on itself,
∘ an angle transmission (92) making it possible to convert a pivoting movement of the pivoting control (90) into a pivoting movement of the intermediate piece,
∘ a helical link (88) configured to convert a pivoting movement of the intermediate piece into a translational movement of at least the first segment (52.1) of the rod (52, 62, 70),
**characterized in that** the adjustment system (74) comprises an anti-return system (104) for blocking rotation of the pivoting control (90) in at least one direction of rotation.

2. Locking mechanism as claimed in claim 1, wherein the intermediate piece is a first ring (86) positioned around the rod (52) and comprising an inner cylindrical surface and in that the helical link (88) comprises at least one tapping on the inner cylindrical surface of the first ring (86) and at least one threading on the rod (52), the tapping and the threading being configured to cooperate in order to obtain the helical link (88), the angle transmission (92) making it possible to convert the pivoting movement of the pivoting control (90) into a pivoting movement of the first ring (86).

3. Locking mechanism as claimed in claim 1, wherein the rod (52) comprises a second segment (52.2) coaxial to the first segment (52.1) and in that the intermediate piece comprises the second segment (52.2) of the rod (52), the angle transmission (92) making it possible to convert the pivoting movement of the pivoting control (90) into a pivoting movement of the second segment (52.2), the helical link (88) making it possible to convert the pivoting movement of the second segment (52.2) into a translational movement of the first segment (52.1) of the rod (52).

4. Locking mechanism as claimed in one of the preceding claims, wherein the first part (40.1) comprises a sliding pivot link linking the rod (52) and the first support (46.1) and a system for immobilizing rotation of the rod (52).

5. Locking mechanism as claimed in one of the preceding claims, wherein the anti-return system (104) comprises a ratchet wheel (108) secured to the pivoting control (90), a ratchet (110) linked to the first support (46.1) by a pivoting link, an elastic return element (112) configured to push the ratchet (110) against the ratchet wheel (108) and a control cam (114) configured to separate the ratchet (110) from the ratchet wheel (108) against the elastic return element (112).

6. Locking mechanism as claimed in one of the preceding claims, wherein the pivoting control (90) comprises a first control axle (94) having a first end (94.1) accessible from the second zone and a lateral face provided, at the first end (94.1), with at least one flat to pivot the first control axle (94) on itself and in that the anti-return system (104) comprises a rotation blocking plate which comprises a through-orifice (106) having a section identical to that of the first end (94.1) and cooperating therewith, said rotation blocking plate being linked to the first support (46.1).

7. Locking mechanism as claimed in one of the preceding claims, wherein the locking mechanism comprises several adjustable components from among an anchoring point (48) configured to cooperate with a hook (56), at least one centering system (60) configured to allow the first and second parts (40.1, 40.2) to be positioned with respect to one another, at least one shim system (68) configured to make it possible to maintain a given distance between the first and second parts (40.1, 40.2) in the locked state.

8. Aircraft comprising at least one movable element (42.1, 42.2) comprising a wall (44.1, 44.2) separating a first zone and a second zone and having a first face (F44.1, F44.2) oriented towards the first zone and a second face (F44.1', F44.2') oriented towards the second zone and at least one locking mechanism as claimed in one of the preceding claims positioned in the first zone and making it possible to keep the movable element (42.1, 42.2) in a given position in the locked state.

9. Aircraft as claimed in the preceding claim, wherein the second face (F44.1') of the wall (44.1) comprises, for each pivoting control (90), a hollowed form (96) configured to house a part of the pivoting control (90) accessible from the second zone, said pivoting control (90) comprising an end face (F94) substantially coplanar with the second face (F44.1') of the wall (44.1).

10. Aircraft as claimed in the preceding claim, wherein the locking mechanism (40) comprises, for each hollowed form (96), a lining plate (100) dimensioned to fill the hollowed form (96) and a rapid attachment system (102) for linking the lining plate (100) to the wall (44.1) or to a support (46.1) of the locking mechanism (40), the lining plate (100) having a face flush with the second face (F44.1') of the wall (44.1) when the lining plate (100) is linked to the wall (44.1) or to the support (46.1).
